# EUROPEAN PATENT APPLICATION

(11) **EP 4 576 859 A1**
(43) Date of publication of application: **25.06.2025**
(21) Application number: 22955769.9
(22) Date of filing: 19.08.2022
(51) Int. Cl.: H04W 16/26, H04W 16/28, H04W 72/23

(54) **RADIO RELAY DEVICE AND RADIO RELAY METHOD**

(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP); SUN, Weiqi, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2022/031431
(87) International publication number: WO 2024/038597

(57) **Abstract**

A wireless relay device includes: a communication unit configured to receive signaling including control information related to a relay function from a base station; a control unit configured to control a relay function based on the control information; and a relay unit configured to perform a relay function of receiving a first signal from the base station, transmitting the first signal to a terminal, receiving a second signal from the terminal, and transmitting the second signal to the base station. The control unit applies a plurality of controls indicated by the control information to the relay function, target time units of the controls being different.

## Description

### FIELD OF THE INVENTION

The present invention relates to a wireless relay device and a wireless relay method in a wireless communication system.

### BACKGROUND OF THE INVENTION

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In 5G, various wireless technologies and network architectures are being discussed to satisfy the requirement of a radio link delay of 1 ms or less while achieving throughput of 10 Gbps or more (e.g., Non-Patent Literature 1).

In the next generation communication, the high frequency band is expected to be used. From the viewpoint of the reduced number of scatterers, reduced shadowing effects, increased attenuation over distance, or the like, due to the characteristics of the high frequency band, the communication quality is required to be improved. The beam control, an environment, and the like, for ensuring the communication quality, are expected to be required.

For example, there is a problem of easily created dead zones because of the radio waves' strong tendency of traveling straight in the high frequency band. Accordingly, methods of improving the communication quality under the multi-path environment have been discussed, the methods using a passive repeater or an active type reflector (RIS: Reconfigurable Intelligent Surface), a smart repeater that receives and amplifies a signal to be re-radiated, and the like (for example, Non-Patent Document 2).

### CITATION LIST

### Non-Patent Document

Non-Patent Document 1: 3GPP TS 38.300 V17.1.0 (2022-06)
Non-Patent Document 2: NTT DOCOMO, "White Paper 5G Evolution and 6G"(2021-02, Version 3.0), Internet<URL:https://www.nttdocomo.co.jp/binary/pdf/corporate/technology/whitepape r_6g/DOCOMO_6G_White_PaperJP_20210203.pdf>
Non-Patent Document 3: 3GPP TR 38.867 V0.1.0 (2022-05)
Non-Patent Document 4: 3GPP TS 38.213 V17.2.0 (2022-06)

### SUMMARY OF THE INVENTION

### TECHNICAL PROBLEM

Discussions are being held regarding a wireless relay device such as a reflector or a smart repeater, which relays radio waves by reflecting or transparently transmitting the radio waves from a radio wave generation source such as a base station to a radio wave reception destination such as a terminal. Here, there may be a case in which granularities of signaling are different in the time domain, the signaling being applied to a control of relaying wireless signals between a base station and a terminal by a wireless relay device, particularly by a network-controlled wireless relay device.

The present invention has been made in view of the above points, and it is an object of the present invention that enables a network-controlled wireless relay device to control relaying of wireless signals in the time domain.

### SOLUTION TO PROBLEM

According to the disclosed technique, a wireless relay device is provided. The wireless relay device includes: a communication unit configured to receive signaling including control information related to a relay function from a base station; a control unit configured to control a relay function based on the control information; and a relay unit configured to perform a relay function of receiving a first signal from the base station, transmitting the first signal to a terminal, receiving a second signal from the terminal, and transmitting the second signal to the base station. The control unit applies a plurality of controls indicated by the control information to the relay function, target time units of the controls being different.

### ADVANTAGEOUS EFFECTS OF INVENTION

According to the disclosed technique, a network-controlled wireless relay device can control relaying of wireless signals in the time domain.

### BRIEF DESCRIPTION OF THE DRAWINGS

[Fig. 1] is a drawing for describing a wireless communication system in an embodiment of the present invention.
[Fig. 2] is a drawing illustrating an example of a functional configuration of a base station 10 in an embodiment of the present invention.
[Fig. 3] is a drawing illustrating an example of a functional configuration of a terminal 20 in an embodiment of the present invention.
[Fig. 4] is a drawing illustrating an example of a functional configuration of a wireless relay device 30 in an embodiment of the present invention.
[Fig. 5] is a drawing illustrating an operational example of a wireless relay device 30 in an embodiment of the present invention.
[Fig. 6] is a drawing illustrating an example of a communication in the high frequency band.
[Fig. 7] is a drawing illustrating an example of a reflection type wireless relay device 30 in an embodiment of the present invention.
[Fig. 8] is a drawing illustrating an example of a transparent type wireless relay device 30 in an embodiment of the present invention.
[Fig. 9] is a drawing illustrating an example of a network-controlled repeater in an embodiment of the present invention.
[Fig. 10] is a drawing for describing an example (1) of a beam indication in an embodiment of the present invention.
[Fig. 11] is a drawing for describing an example (2) of a beam indication in an embodiment of the present invention.
[Fig. 12] is a drawing for describing an example (3) of a beam indication in an embodiment of the present invention.
[Fig. 13] is a drawing for describing an example (4) of a beam indication in an embodiment of the present invention.
[Fig. 14] is a drawing for describing an example (1) of an ON-OFF indication in an embodiment of the present invention.
[Fig. 15] is a drawing for describing an example (2) of an ON-OFF indication in an embodiment of the present invention.
[Fig. 16] is a drawing for describing an example (3) of an ON-OFF indication in an embodiment of the present invention.
[Fig. 17] is a drawing for describing an example (4) of an ON-OFF indication in an embodiment of the present invention.
[Fig. 18] is a drawing illustrating an example of a hardware structure of the base station 10, the terminal 20, or the wireless relay device 30 in an embodiment of the present invention.
[Fig. 19] is a drawing illustrating an example of a structure of a vehicle 2001 in an embodiment of the present invention.

### DETAILED DESCRIPTION OF THE PREFERRED EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

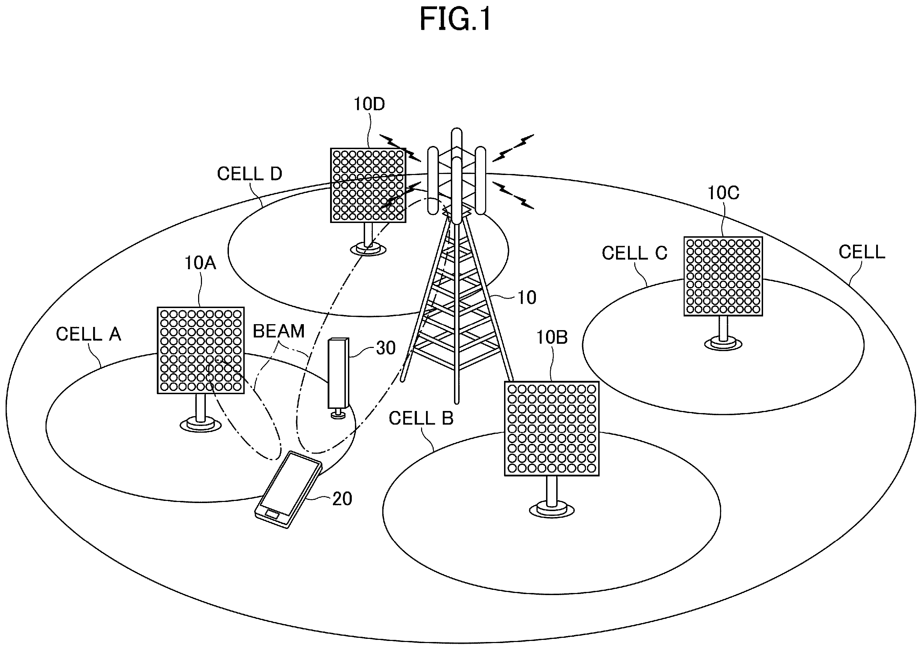

Fig. 1 is a drawing illustrating a wireless communication system according to an embodiment of the present invention. As illustrated in Fig. 1, a wireless communication system according to an embodiment of the present invention includes a base station 10 and a terminal 20. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. In addition, a TTI (Transmission Time Interval) in the time domain may be a slot or a sub-slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are merely examples.

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

The terminal 20 can perform carrier aggregation to communicate with the base station 10 by bundling a plurality of cells (a plurality of CCs). In carrier aggregation, one primary cell and one or more secondary cells are used. In addition, PUCCH-SCell having PUCCH may be used.

In addition, in a wireless communication system in an embodiment of the present invention, the base station 10 is a wireless base station deployed in 5G or 6G as an example, and forms a cell. It is to be noted that the cell is a cell of a relatively large size and is referred to as a macro cell.

The base stations 10A to 10D are base stations deployed in 5G or 6G. The base stations 10A to 10D respectively form cells CA to D whose size is smaller than the macro cell. The cells A to D may be referred to as small cells, macro cells, or the like. As illustrated in Fig. 1, the cells A to D may be formed to be included in the macro cell.

The macro cell may be generally interpreted as an area with a radius of several hundred meters to tens of kilometers covered by a single base station in which communications are available. In addition, the small cell may be interpreted as a generic name of a cell that covers a smaller area compared with the macro cell.

It is to be noted that the base station 10 and the base stations 0A to 10D may be described as a gNodeB (gNB), BS (Base Station), or the like. In addition, the terminal 20 may be described as a UE, MS, or the like. Furthermore, a specific configuration of a wireless communication system including the numbers and types of base stations and terminals is not limited to an example illustrated in Fig. 1.

In addition, the wireless communication system is not necessarily limited to a wireless communication system according to 5G or 6G. For example, the wireless communication system may be a wireless communication system of the next generation of 6G, or may be a wireless communication system according to LTE.

The base station 10 and the base stations 10A to 10D perform wireless communications according to 5G or 6G with the terminal 20, as an example. The base station 10, the base stations 10A to 10D, and the terminal 20 may support: a massive MIMO in which highly directional beams are generated by controlling a wireless signal transmitted from a plurality of antenna elements; a carrier aggregation (CA) in which a plurality of component carriers (CCs) are bundled to be used; a dual connectivity (DC) in which communications are simultaneously performed between the terminal 20 and each of two NG-RAN nodes; an IAB (Integrated Access and Backhaul) in which the wireless backhaul between wireless communication nodes such as gNBs is integrated with the wireless access to the terminal 20; and the like.

In addition, the wireless communication system may also support the high frequency band that is higher than the following frequency ranges (FRs) that are specified in the 3GPP release 15. For example, a band between 410 MHz to 7.125 GHz may be supported as FR1, and a band between 24.25 GHz to 52.6 GHz may be supported as FR2. Furthermore, the wireless communication system may support a frequency band that is higher than 52.6 GHz up to 114.25 GHz. The frequency band may be referred to as a millimeter wave band.

Here, the base station 10 that supports the massive MIMO can transmit beams. In general, the massive MIMO means a MIMO communication in which an antenna with more than 100 antenna elements is used and enables a wireless communication faster than the conventional wireless communication according to the multiplexing effects of a plurality of streams. In addition, advanced beamforming is also available. The beam width can be dynamically changed in accordance with the used frequency band, the state of the terminal 20, etc. In addition, the increased reception signal power can be achieved according to the beamforming gain obtained by using narrower beams. Furthermore, good effects such as reduced interference generation, effective utilization of wireless resources are expected.

In addition, the wireless communication system may include a wireless relay device 30. In an embodiment of the present invention, as an example, the wireless relay device 30 may be a reflector (RIS), a phase control reflector, a passive repeater, an IRS (Intelligent Reflecting Surface), or the like. As a specific example, the reflector (RIS: Reconfigurable Intelligent Surface) may be what is called a meta-material reflector, a dynamic meta surface, a meta-surface lens, or the like (for example, Non-Patent Document 2).

In an embodiment of the present invention, the wireless relay device 30 relays a wireless signal transmitted from a base station 10A, for example. In the description of an embodiment of the present invention, "relay" may mean at least one of "reflect", "transparently transmit", "aggregate (collect the radio waves approximately to a point)", or "diffract". The terminal 20 can receive a wireless signal relayed by the wireless relay device 30. In addition, the wireless relay device 30 may relay a wireless signal transmitted from the terminal 20 or may relay a wireless signal transmitted from the base station 10.

As an example, the wireless relay device 30 can change the phase of a wireless signal to be relayed to the terminal 20. From the above-described viewpoint, the wireless relay device 30 may be referred to as a phase variable reflector. It is to be noted that, in an embodiment of the present invention, the wireless relay device 30 may be, but is not limited to, a device having a function of changing the phase of a wireless signal to be relayed. In addition, the wireless relay device 30 may be referred to as a repeater, relay device, reflection array, IRS, transmission array, or the like.

In addition, in an embodiment of the present invention, the wireless relay device 30 including an RIS may be referred to as a battery-less device, meta-material function device, intelligent reflecting surface, smart repeater, or the like. As an example, the wireless relay device 30 including the RIS, smart repeater, or the like, may be defined as a device having a function as described in 1) to 5) below.
1) The device may have a function of receiving a signal transmitted from the base station 10. The signal may be a DL signal such as an SSB (SS/PBCH block), PDCCH, PDSCH, DM-RS (Demodulation Reference Signal), PT-RS (Phase Tracking Reference Signal), CSI-RS (Channel State Information Reference Signal), RIS dedicated signal, or the like. The device may have a function of receiving a signal carrying information related to a meta-material function. It is to be noted that the device may have a function of transmitting the signal to the terminal 20. An SSB may be a signal including a synchronization signal and broadcast information.
2) The device may have a function of transmitting a signal to the base station 10. The signal may be a UL signal such as a PRACH, PUCCH, PUSCH, DM-RS, PT-RS, SRS (Sounding Reference Signal), RIS dedicated signal, or the like. The device may have a function of transmitting information related to a meta-material function. It is to be noted that the device may have a function of receiving the signal from the terminal 20.
3) The device may have a function of frame synchronization with the base station 10. It is to be noted that the device may have a function of frame synchronization with the terminal 20.
4) The device may have a function of reflecting a signal transmitted from the base station 10 or the terminal 20. For example, the reflecting function may be a function related to the phase change, or a function related to beam control (for example, a function related to control of TCI (Transmission Configuration Indication) - state, or QCL (Quasi Co Location), selection and application of beams, and selection and application of spatial filters/precoding weights).
5) The device may have a function of changing power of a signal transmitted from the base station 10 or the terminal 20. For example, the function of changing power may be power amplification.

In addition, "receive to transmit" or "relay" in the wireless relay device 30 including a RIS, smart repeater, or the like, may mean to perform transmission including the function A described below but not including the function B described below.
Function A: Applying a phase shifter.
Function B: Not including compensation circuit (for example, amplifying, filtering).

As a different example,
Function A: Applying both a phase shifter and compensation circuit.
Function B: Not including frequency conversion.

It is to be noted that the amplitude may be amplified when the phase is changed in the wireless relay device 30 such as an RIS, or the like. In addition, "relaying" in the wireless relay device 30 such as an RIS, or the like, may mean transmitting a received signal as it is without performing a process of layer 2 or layer 3 level, may mean transmitting a received signal as it is in the physical layer level, or may mean transmitting a received signal as it is without interpreting the signal (during "relaying", changing of the phase or amplifying of the amplitude may be performed).

### (Device configuration)

Next, examples of functional configurations of the base station 10, the terminal 20, and the wireless relay device 30 that perform processing and operations in an embodiment of the present invention will be described. The base station 10, the terminal 20, and the wireless relay device 30 include functions of performing embodiments to be described below. With respect to the above, each of the base station 10, the terminal 20, and the wireless relay device 30 may include only one function among the embodiments.

### <Base station 10>

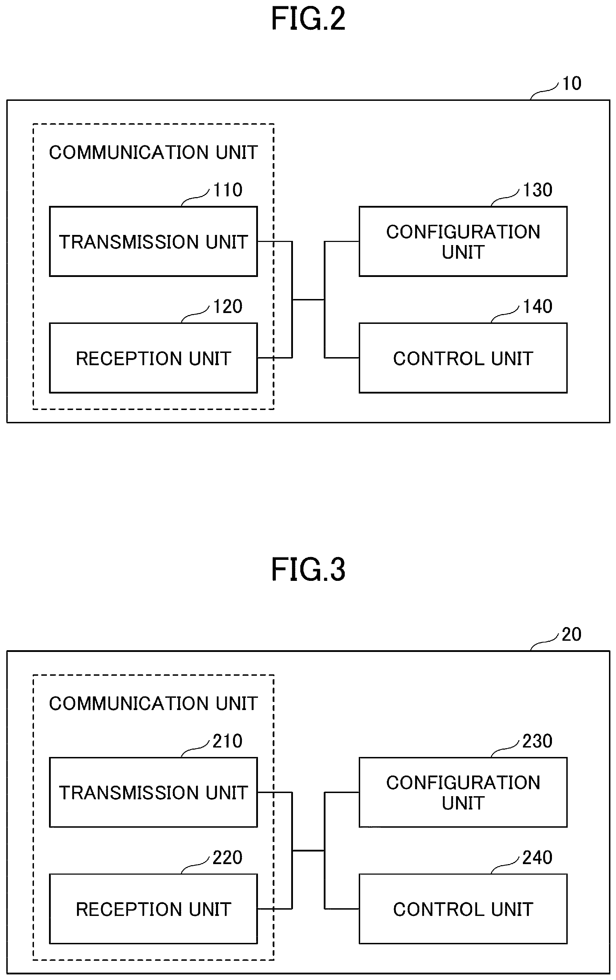

Fig. 2 is a diagram illustrating an example of a functional configuration of the base station 10. As shown in Fig. 2, the base station 10 includes a transmission unit 110, a reception unit 120, a configuration unit 130, and a control unit 140. The functional configuration illustrated in Fig. 2 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiments.

The configuration unit 130 stores preset configuration information and various configuration information items to be transmitted to the terminal 20 in a storage apparatus and reads the preset configuration information from the storage apparatus as necessary. The control unit 140 performs, for example, resource allocation and control of the entire base station 10. Note that the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 3 is a diagram illustrating an example of a functional configuration of the terminal 20. As shown in Fig. 3, the terminal 20 includes a transmission unit 210, a reception unit 220, a configuration unit 230, and a control unit 240. The functional configuration illustrated in Fig. 3 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains higher layer signals from the received physical layer signals. In addition, the transmission unit 210 transmits a HARQ-ACK, and the reception unit 220 receives configuration information described in an embodiment of the present invention.

The configuration unit 230 stores, in a storage device, various configuration information items received from the base station 10 via the reception unit 220, and reads them from the storage device as necessary. In addition, the configuration unit 230 also stores pre-configured configuration information. The control unit 240 controls the entire terminal 20. Note that the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### <Wireless relay device 30>

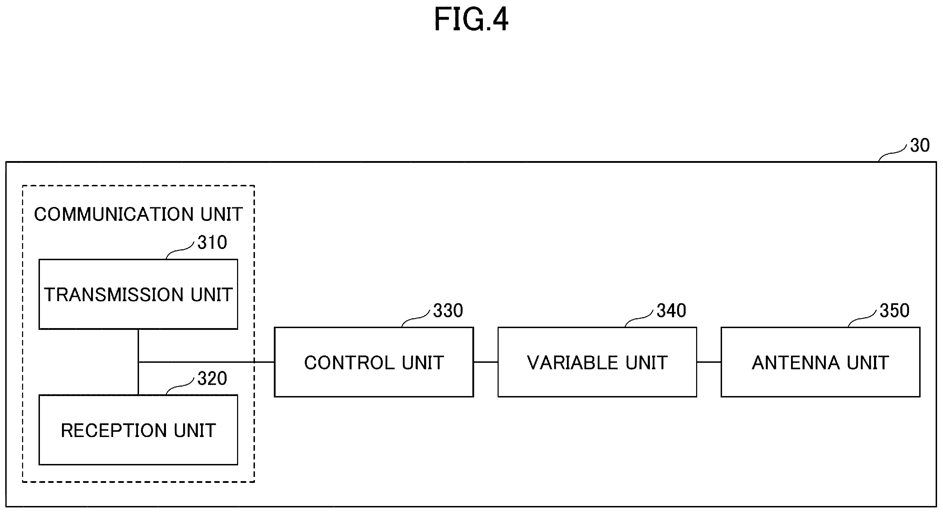

Fig. 4 is a drawing illustrating an example of a functional configuration of a wireless relay device 30 in an embodiment of the present invention. As shown in Fig. 4, the wireless relay device 30 includes a transmission unit 310, a reception unit 320, a control unit 330, a variable unit 340, and an antenna unit 350. Functional divisions and names of functional units may be anything as long as operations according to an embodiment of the present invention can be performed. The transmission unit 310 and the reception unit 320 may be referred to as a communication unit.

The antenna unit 350 includes at least one antenna that is connected to the variable unit 340. For example, the antenna unit 350 may be arranged as an array antenna. In an embodiment of the present invention, the antenna unit 350 may be specifically referred to as a relay antenna. It is to be noted that the variable unit 340 and the antenna unit 350 may be referred to as a relay unit.

The variable unit 340 is connected to the antenna unit 350, and is capable of changing the phase, load, amplitude, or the like. For example, the variable unit 340 may be a variable phase shifter, a phase shifter, an amplifier, or the like. For example, the direction of the radio waves or beams can be changed by changing the phase of the radio waves transmitted from the generation source of the radio waves to the relay antenna.

The control unit 330 is a control means for controlling the variable unit 340. In an embodiment of the present invention, the control unit 330 functions as a control unit for controlling the relaying states at the time when relaying radio waves received from the base station 10 or the terminal 20 without signal interpretation. Here, the control unit 330 may change the relaying state based on the control information received from the base station 10 or the terminal 20 via the communication unit, or may change the relaying state based on the reception state of the radio waves received from the base station 10 or the terminal 20. For example, the control unit 330 may select appropriate (directions of) reception beam and transmission beam and may control the variable unit 340, based on the control information such as an SSB, or the like. Similarly, the control unit 330 may select an appropriate combination of reception direction and transmission direction, according to the reception state, based on the criteria such as the best reception quality or the largest reception power and may control the variable unit 340.

In addition, in an embodiment of the present invention, the control unit 330 can control the variable unit 340, based on, for example, the information related to the propagation path between the terminal 20 or the base station 10A and the antenna unit 350 (hereinafter, including information estimated from the reception state and the control information). For example, the control unit 330 can relay the radio waves received from the base station 10A towards a specific direction of the recipient of the radio waves (in this case, the terminal 20) by using a known method including an active repeater, RIS, or the like, to change the phase without using the transmission power. Specifically, the control unit 330 controls the phase of the wireless signal to be relayed towards the terminal 20 or the base station 10A, based on the estimated propagation path information, H_{PT} and H_{RP}. In other words, according to the same principle as the beamforming, etc., the radio waves can be relayed towards a specific direction by changing the phase of the array antenna, etc. It is to be noted that the wireless relay device 30 only controls (changes) the phase of the wireless signal (radio waves) via the control unit 330, and thus, may perform the relaying without a power supply and without performing the power amplification of the wireless signal to be relayed.

In addition, the control unit 330 may obtain the information according to the reception state in an embodiment of the present invention. In addition, the reception unit 320 may obtain control information from the base station 10A or the terminal 20. For example, the reception unit 320 may receive, as the control information, various signals including SSB (including various signals described as an example in the above-described functions) transmitted from the base station 10A or the terminal 20.

In addition, the control unit 330 may estimate the propagation path information (H_{PT} and H_{RP}) between the generation source of the radio waves (for example, the base station 10A or the terminal 20) and the antenna unit 350, based on the reception state (for example, the change of the reception power, or the like) at the time of controlling the variable unit 340.

The propagation path information related to each propagation path (propagation channel information) is specifically information of amplitude or phase and is estimated information with respect to the propagation path of the radio waves arriving at the antenna unit 350 in an embodiment of the present invention. As an example, according to the same principle as the I/Q (In-phase/Quadrature) detection, the control unit 330 may estimate the propagation path information of the antenna unit 350, based on the change of the reception power at the time when the phase of the variable unit 340 of the array-shaped antenna unit 350 is orthogonally switched.

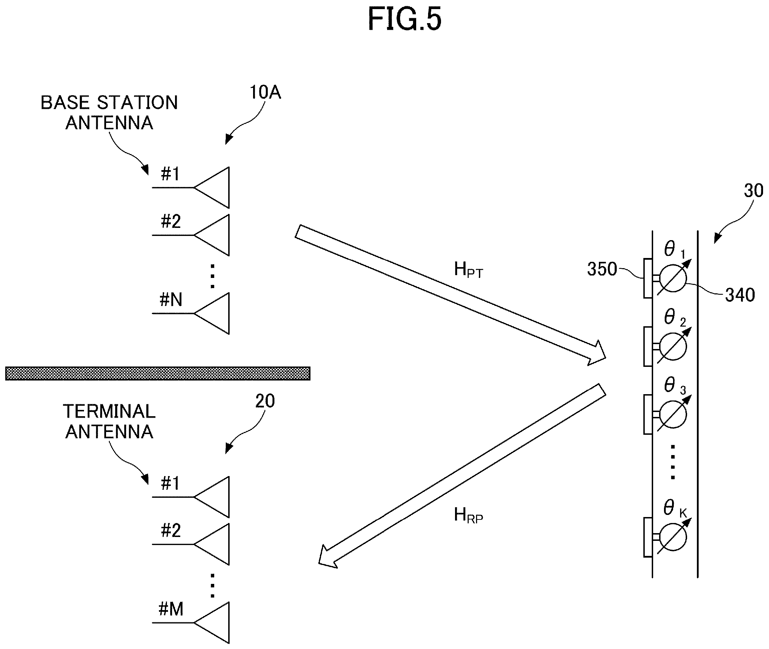

Fig. 5 is an operation example of a wireless relay device 30 in an embodiment of the present invention. As illustrated in Fig. 5, as an example, the wireless relay device 30 is located between the base station 10A (may be another base station 10, or the like) and the terminal 20, and relays (reflects, transparently transmits, collects, diffracts) a wireless signal transmitted and received between the base station 10A and the terminal 20.

As a specific example, in a case where the wireless quality is good, the base station 10A and the terminal 20 directly transmit and receive a wireless signal without involving the wireless relay device 30. On the other hand, in a case where the wireless quality is degraded, for example, where there is an obstruction between the base station 10A and the terminal 20, the wireless relay device 30 relays a wireless signal transmitted and received between the base station 10A and the terminal 20.

Specifically, the wireless relay device 30 estimates the propagation path information, H_{PT} and H_{RT}, between the generation source such as the base station 10A or the terminal 20 and the relay antenna, based on the change of the reception power at the time of controlling the variable unit 340 such as a variable phase shifter. In addition, the wireless relay device 30 relays a wireless signal towards the recipient of the radio waves such as the terminal 20, by controlling the variable unit 340 such as a variable phase shifter, based on the estimated propagation path information. It is to be noted that the wireless relay device 30 may relay a wireless signal towards the recipient of the radio waves such as the base station 10A or the terminal 20 by controlling the variable unit 340 such as a variable phase shifter based on the control information received from the base station 10A or the terminal 20 without limiting the case to a case of estimating the propagation path information, H_{PT} and H_{RT}.

Here, the propagation path or the propagation channel is each of the communication paths of the wireless communication, and is a communication path between each of the transmission antennas and each of the reception antennas (for example, base station antennas and terminal antennas in the figure).

As an example, the wireless relay device 30 includes: an antenna unit 350 including a small multi-element antenna corresponding to the massive MIMO; and a variable unit 340 including a variable phase shifter or a phase shifter that changes the phase of a wireless signal, which is substantially the radio waves, to a specific phase, and controls the phase of the radio waves to be relayed towards the terminal 20 or the base station 10A by using the variable unit 340.

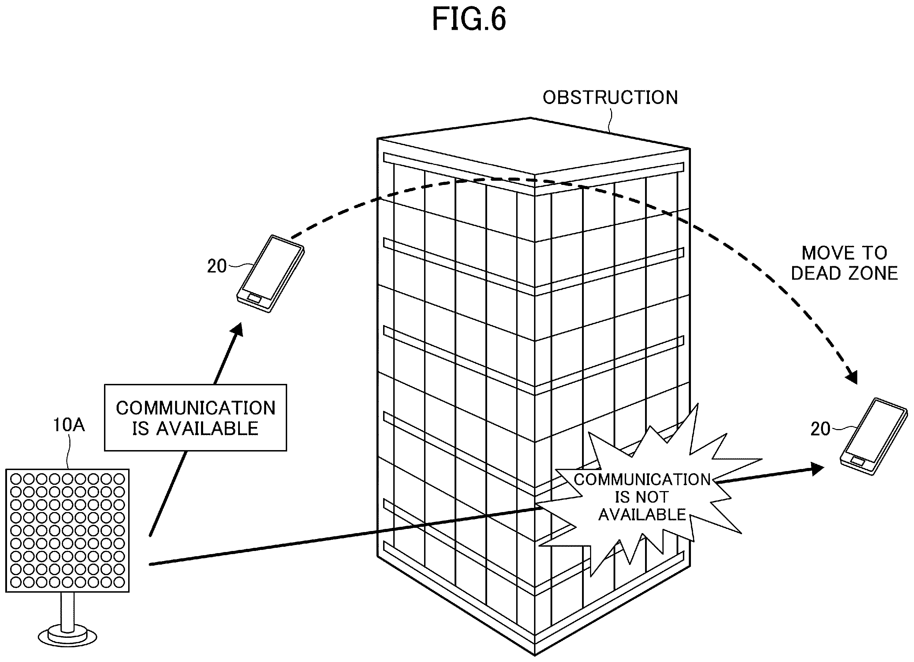

Fig. 6 is a drawing illustrating an example of a communication in the high frequency band. As illustrated in Fig. 6, in a case of using the high frequency band that is equal to or higher than several GHz to several tens of GHz, dead zones are easily created because of the radio waves' strong tendency of traveling straight. If the line of sight between the base station 10A and the terminal 20 is not blocked, the wireless communication between the base station 10A and the terminal 20 is not affected even in a case where the high frequency band is used. On the other hand, for example, if the line of sight between the base station 10A and the terminal 20 is blocked by an obstruction such as a building or a tree, the wireless quality is significantly degraded. In other words, when the terminal 20 moves to a dead zone in which the line of sight is blocked by an obstruction, the communication can be interrupted.

Considering the fact that there is an application that utilizes high data rate/high capacity and low latency characteristics, it is important to resolve the dead zones to ensure the connection between the base station and the terminal without a communication interruption within the wireless communication system.

Accordingly, technologies of the radio wave propagation control device such as an RIS or smart repeater that can relay the radio waves between the base station 10A and the terminal 20 are being developed. In this way, communication characteristics can be improved by controlling the propagation characteristics of the base station signals, and thus, the coverage enhancement without using a signal source and the reduction of the installation and deployment cost due to the addition of base stations can be achieved.

Conventionally, there are a passive type and an active type in the radio wave propagation control device. The passive type has an advantage of not requiring control information, but is not capable of following the mobile body, a change in environment, or the like. On the other hand, the active type has a disadvantage of increased overhead requiring the control information, but has an advantage of being capable of variably controlling the propagation characteristics of the radio waves by changing the load (phase) state of the control antennas and capable of following the mobile body, environment change, etc.

There are two types including a feedback (FB) type and a propagation path information type in the active type radio wave propagation control device and control method. In the FB type, the variable type radio wave propagation control device searches an optimal condition by causing the terminal 20, or the like, to perform feedback of the communication state when the load (phase) state is randomly changed. On the other hand, in the propagation path information type, the optimal radio wave propagation control can be performed by determining the load state based on the propagation path information between the base station and the radio wave propagation control device. In an embodiment of the present invention, either type can be applied.

In addition, with respect to the relay method, there are types of reflection, transparent transmission, diffraction, collection, etc. In an embodiment of the present invention, as an example, configuration examples of a reflection type and a transparent transmission type will be described below (refer to Non-Patent Document 2 with respect to the diffraction type and the collection type).

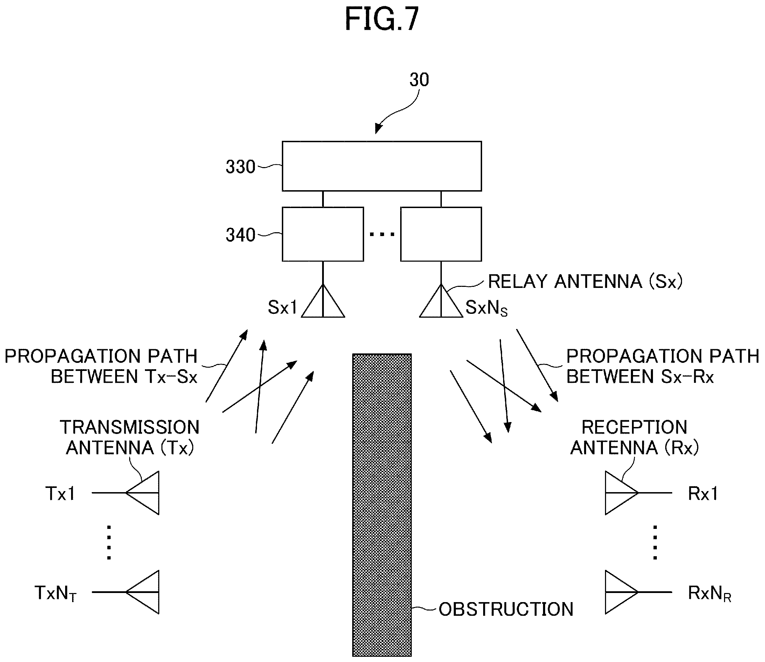

Fig. 7 is a drawing illustrating an example of a reflection type wireless relay device 30 in an embodiment of the present invention. Fig. 7 will be used for describing an example of a system structure of a reflection type wireless relay device 30. Fig. 7 is a drawing illustrating relationships among the transmission antenna Tx of the base station 10A or the like, the relay antenna Sx of the transparent transmission type wireless relay device 30, and the reception antenna Rx of the terminal 20 or the like. As illustrated in Fig. 7, in an embodiment of the present invention, MIMO is used as an example, there are multiple propagation paths between Tx and Sx and multiple propagation paths between Sx and Rx, and the wireless relay device 30 relays the radio waves by controlling the variable unit 340 that includes a variable phase shifter of the relay antenna Sx, or the like.

As illustrated in Fig. 7, in a case of the reflection type, the array-shaped relay antenna is arranged in a manner in which antennas face the same direction. According to the above, propagation paths of the relay antenna can be estimated based on the reception states that are observed when multiple phase conditions of the relay antenna are changed.

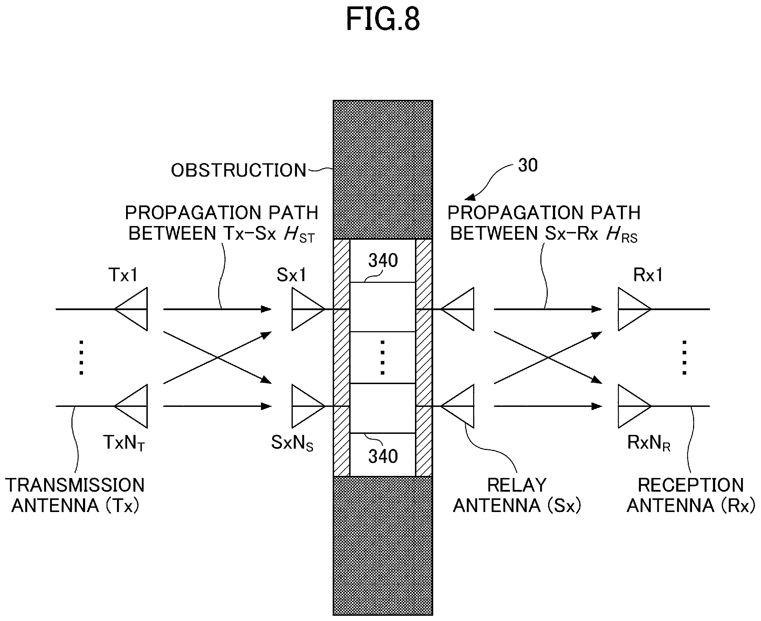

Fig. 8 is a drawing illustrating an example of a transparent transmission type wireless relay device 30 in an embodiment of the present invention. Fig. 8 will be used for describing an example of a system structure of a transparent transmission type wireless relay device 30. Fig. 8 is a drawing illustrating relationships among the transmission antenna Tx of the base station 10A or the like, the relay antenna Sx of the transparent transmission type wireless relay device 30, and the reception antenna Rx of the terminal 20 or the like. As illustrated in Fig. 8, in an embodiment of the present invention, MIMO is used as an example, there are multiple propagation paths between Tx and Sx and multiple propagation paths between Sx and Rx, and the wireless relay device 30 relays the radio waves received from one side to the other side via the variable unit 340 of the relay antenna Sx such as a variable phase shifter as illustrated in the figure. As described above, in a case of the transparent transmission type, reference antennas on the left side of the figure and relay antennas on the right side of the figure are arranged as pairs respectively facing the opposite directions in a manner in which the radio waves received from one side can be relayed to the other side. Regardless of the transparent transmission type or the reflection type, the reception state may be measured by detecting the power arrived at the relay antennas by using the power detection device, or the like. In addition, propagation paths of the relay antennas can be estimated based on the reception signals that are observed when multiple phase conditions of the relay antennas are changed.

For example, in the future network such as 6G, even higher quality is required as compared with 5G. For example, the tera-bps order of ultra high speed, the optical-communication level of high reliability and low latency, and the like, are required. In addition, the ultra coverage enhancement, the ultra long-distance communication, the ultra reliability communication, the virtual cell, the flexible network, the mesh network, the sidelink enhancement, the design in which RIS or smart repeater is taken into account will be required.

In order to achieve the above-described quality, the utilization of very high frequencies, for example, tera-Hz waves is expected. For example, in a case of using the very high frequencies such as tera-Hz waves, while there are advantages of the faster speed by utilization of ultra-wide band and the lower latency by utilization of shorter symbol length, disadvantages of the narrower coverage due to the larger attenuation rate, and the reduced reliability due to the higher tendency of traveling straight are expected. Discussions are required on how to provide redundancy to each point for which 6G communications are required, that is, how to increase the number of transmission points of the communication.

As described above, the RIS reflects or transparently transmits a beam transmitted from the base station 10 or the terminal 20 in a predetermined direction to be transmitted to the terminal 20 or the base station 10. The passive type RIS is a device that does not change the control of the reflection angle, beam width, or the like, in accordance with the position of the mobile station, and thus, control information is not required but the precise beam control is difficult. The active-type RIS is a device that changes the control of the reflection angle, beam width, or the like, in accordance with the position of the mobile station, and thus, the precise beam control is available but control information is required and the overhead increases. The number of transmission points of communications can be increased by the RIS.

It is to be noted that the RIS may be referred to, but is not limited to, the names described in 1) to 5) below.
1) Battery-less device
2) Meta-material function device
3) Intelligent reflecting surface
4) Smart repeater
5) Network-controlled repeater

The RIS may be a device with a predetermined function, and the predetermined function may be at least one of 1) or 2) described below, for example.

### 1) UE function

The reception function of a signal transmitted from the base station 10 (for example, DL signal, SSB, PDCCH, PDSCH, DM-RS, PT-RS, CSI-RS, RIS dedicated signal). According to the above-described reception function, information related to the meta-material function described in 2) below may be received. The transmission function of a signal transmitted to the base station 10 (for example, UL signal, PRACH, PUCCH, PUSCH, DM-RS, PT-RS, SRS, RIS dedicated signal). According to the above-described transmission function, information related to the meta-material function described in 2) below may be transmitted. The frame synchronization function with the base station 10.

### 2) Meta-material function

The reflecting function of a signal transmitted from the base station 10 or the terminal 20 (for example, phase change). The signal reflection may be performed by performing phase change by each of a plurality of reflecting elements included in the RIS, or the signal reflection may be performed by performing the common phase change by the plurality of reflecting elements. The function related to beam control (for example, a function related to control of TCI-state or QCL, application of beam selection, application of spatial filter/precoding weight selection). The power change function of a signal transmitted from the base station 10 or the terminal 20 (for example, power amplification). Each of the reflecting elements included in the RIS may perform different power change, or the plurality of reflecting elements may perform common power change.

"Receive to transmit" by the RIS may mean to reflect radio waves/signal. Hereinafter, the terms of "base station" and "terminal" will be used. However, the terms are not limited to "base station" and "terminal", and may be replaced with a communication device. The RIS may be replaced with a smart repeater, a relay device, or the like.

For example, the RIS may operate by assuming 1) to 6) described below.
1) The network operator configures the RIS
2) The RIS is fixed and does not move
3) The RIS relays a signal from a single base station alone
4) The RIS is capable of receiving and transmitting a control signal
5) The RIS operates by using the half duplex communication
6) Single RIS environment

Here, discussions are being held regarding the network-controlled repeater that is a wireless relay device controlled by the network (for example, Non-Patent Document 3). The network-controlled repeater is different from the conventional repeater that performs amplification and transfer. For example, beams, timings, DL or UL, ON or OFF, and transmission power can be controlled by the network. Hereinafter, "network-controlled repeater" may be also referred to as "repeater".

The network-controlled repeater is used as an in-band RF repeater in order to enhance coverage in the FR1 and FR2 bands. In particular, the network-controlled repeater is expected to be used for the FR2 deployment in the outdoor and O2I (outdoor to indoor) scenario. For example, an environment of a single hop and no move may be assumed to be an environment for the network-controlled repeater. In addition, the network-controlled repeater may be transparent for UEs. In addition, the network-controlled repeater may be capable of simultaneously maintaining the link between the gNB and the repeater and the link between the repeater and the UE.

With respect to the side control information used for controlling the network-controlled repeater from the network, the following items are being discussed.
- Information related to the beamforming
- Information related to the timing of transmission or reception
- Information related to UL-DL TDD configuration
- ON-OFF information for interference control and energy saving
- Power control for interference control

In addition , the side control information via L1 and L2 signaling is being discussed. In addition, the identification and authentication of the network-controlled repeater is being discussed.

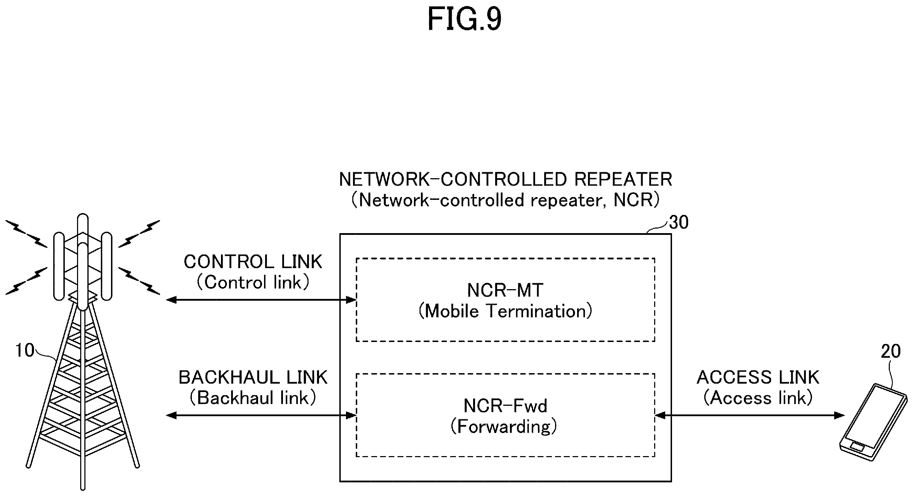

Fig. 9 is a drawing illustrating an example of a network-controlled repeater in an embodiment of the present invention. The network-controlled repeater (NCR) may be configured as illustrated in Fig. 9. Hereinafter, the network-controlled repeater may be also referred to as an NCR. The NCR-MT (Mobile Termination) may be defined as a device that has a function of communicating with a base station 10 via a control link (C-link). For example, transmission and reception of the side control information can be performed via a control link. The control link may be based on the NR-Uu interface.

The NCR-Fwd (Forwarding) may be defined as a device that has a function of performing amplification and transfer of UL and DL RF signals between the base station 10 and the terminal 20 via a backhaul link and an access link. An operation of the NCR-Fwd may be controlled based on the side control information received from the base station 10. As illustrated in Fig. 9, the backhaul link corresponds to communications between the base station 10 and the NCR-Fwd and the access link corresponds to communications between the terminal 20 and the NCR-Fwd.

For example, in FR2, the information related to the beam is useful and recommended as side control information for controlling an operation of the NCR 30 at least for the access link. The beam index or the source RS index such as a TCI indicator is expected to be used as an indication related the beam in the access link.

In order to indicate a beam in an access link for the NCR-Fwd DL transmission, the NCR 30 may perform an operation as described in the following 1) to 11), for example. An operation described in the following 1) to 11) is referred to as "Operation A". It is to be noted that, hereinafter, the gNB transmission beam ID and/or repeater DL transmission beam ID will be referred to as the gNB transmission beam ID/repeater DL transmission beam ID.
1) The sequence of the gNB transmission beam ID/repeater DL transmission beam ID may be indicated. The sequence may be applied to a sequence of a time unit for indicating the beam ID that is applied for each time unit.
2) A single gNB transmission beam ID/repeater DL transmission beam ID may be indicated. The beam ID may be applied to a sequence of a time unit.
3) A periodic pattern may be indicated. Periodicity and an offset may be indicated. A sequence of the gNB transmission beam ID/repeater DL transmission beam ID may be indicated as a beam ID that is applied to each time unit included in the periodicity.
4) A periodic pattern may be indicated. Periodicity and an offset may be indicated. A single gNB transmission beam ID/repeater DL transmission beam ID may be indicated as a beam ID that is applied to each time unit included in the periodicity.
5) The conventional gNB transmission beam indication for the DL channel or reference signal (PDSCH, PDCCH, SSB, CSI-RS) may be used. For example, the indication may be cell-specific, or a group-common RNTI may be used.
6) PDSCH scheduling DCI (DCI format 1_X) may be used. The indicated gNB transmission beam ID/repeater DL transmission beam ID and the corresponding repeater DL transmission beam may be applied to the slot and symbol indicated by the time domain resource field of the PDSCH scheduling DCI.
7) SPS (Semi persistent scheduling) configuration or activation may be used. The indicated gNB transmission beam ID/repeater DL transmission beam ID and the corresponding repeater DL transmission beam may be applied to the slot and symbol indicated by the SPS configuration and SPS activation DCI via RRC signaling.
8) The unified TCI state indication DCI may be used. The indicated gNB transmission beam ID/repeater DL transmission beam ID and the corresponding repeater DL transmission beam may be applied starting from the first slot or symbol that is X slots or symbols after the last slot or symbol of PUCCH carrying the HARQ-ACK corresponding to the DCI.
9) The gNB transmission beam may be indicated for each gNB DL RS resource.
10) The repeater DL transmission beam may be indicated for each repeater DL RS resource.
11) The repeater DL transmission beam may be indicated for each gNB DL RS resource.

In order to indicate a beam in an access link for the NCR-Fwd UL reception, the NCR 30 may perform an operation as described in the following 1) to 7), for example. An operation described in the following 1) to 7) is referred to as "Operation B".
1) The sequence of the repeater UL reception beam ID may be indicated. The sequence may be applied to a sequence of a time unit for indicating the beam ID that is applied for each time unit.
2) A single repeater UL reception beam ID may be indicated. The beam ID may be applied to a sequence of a time unit.
3) A periodic pattern may be indicated. Periodicity and an offset may be indicated. A sequence of the repeater UL reception beam ID may be indicated as a beam ID that is applied to each time unit included in the periodicity.
4) A periodic pattern may be indicated. Periodicity and an offset may be indicated. A single repeater UL reception beam ID may be indicated as a beam ID that is applied to each time unit included in the periodicity.
5) PUSCH scheduling DCI (DCI format 0_X) may be used. The indicated repeater UL reception beam ID and the corresponding repeater UL reception beam may be applied to the slot and symbol indicated by the time domain resource field of the of PUSCH scheduling DCI.
6) CG (Configured grant) configuration or activation may be used. The indicated repeater UL reception beam ID and the corresponding repeater UL reception beam may be applied to the slot and symbol indicated by the CG configuration and CG activation DCI via RRC signaling.
7) The unified TCI state indication DCI may be used. The indicated repeater UL reception beam ID and the corresponding repeater UL reception beam may be applied starting from the first slot or symbol that is X slots or symbols after the last slot or symbol of PUCCH carrying the HARQ-ACK corresponding to the DCI.

Here, the beam of the NCR access link may be indicated for a single time unit. With respect to the granularity of the time unit, it becomes necessary to apply different NCR beams to symbols in the same slot at least in some cases (for example, forwarding of SSB or CSI-RS). Therefore, a symbol-level beam indication is required.

However, the symbol-level beam indication increases the overhead. In some cases (for example, forwarding of UE data), the slot-level beam indication may be sufficient.

Accordingly, a combination of the slot-level beam indication and the symbol-level beam indication may be supported. In one slot, the NCR beam may be indicated for each slot, and in another slot, the NCR beam may be indicated for each symbol. Hereinafter, the signaling related to the combination will be described in detail.

In order to support a combination of the slot-level NCR access beam indication and the symbol-level NCR access beam indication, the following Option 1) and Option 2) may be performed. It is to be noted that the NCR access beam may be a beam applied to the access link, may be an NCR-Fwd DL transmission beam, may be an NCR-Fwd UL reception beam, may be a beam applied to the backhaul link, may be an NCR-Fwd DL reception beam, or may be an NCR-Fwd UL transmission beam.

Option 1) The NCR access beam indication may be either indicated on a per-slot basis or indicated on a per-symbol basis in a time unit.

The NCR access beam indication on a per-slot basis and the NCR access beam indication on a per-symbol basis may be indicated with respect to non-overlapping time units. The NCR 30 is not required to expect that both the NCR access beam indication on a per-slot basis and the NCR access beam indication on a per-symbol basis with respect to a time unit will be received.

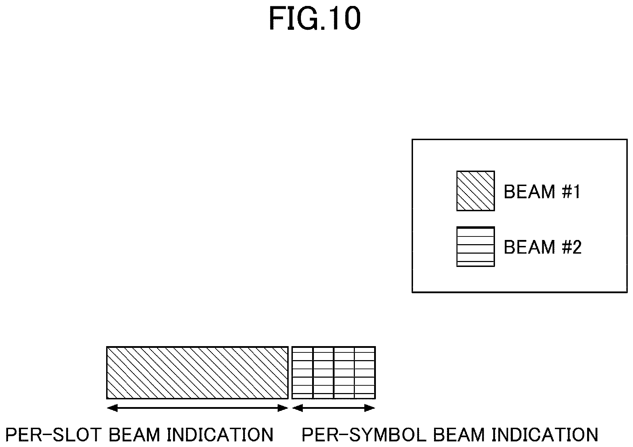

Fig. 10 is a drawing for describing an example (1) of a beam indication in an embodiment of the present invention. As illustrated in Fig. 10, with respect to the NCR access beam indication on a per-slot basis and the NCR access beam indication on a per-symbol basis, only one of the indications may be indicated for the same time unit, or the indicated time domains are not required to overlap with each other.

In addition, with respect to the slot for which a specific NCR access beam index is indicated, a per-symbol indication may be expected, or with respect to the slot for which the specific NCR access beam index is not indicated or with respect to the slot for which an NCR access beam index other than the specific NCR access beam index is indicated, a per-symbol indication is not required to be expected.

In addition, a per-symbol indication may be expected for a slot for which specific information is indicated, or a per-symbol indication is not required to be expected for a slot for which the specific information is not indicated.

Option 1-1) The NCR access beam indication on a per-slot basis and the NCR access beam indication on a per-symbol basis may be indicated via separate signaling. The beam indication via the signaling may be performed according to the above-described Operation A) and Operation B).

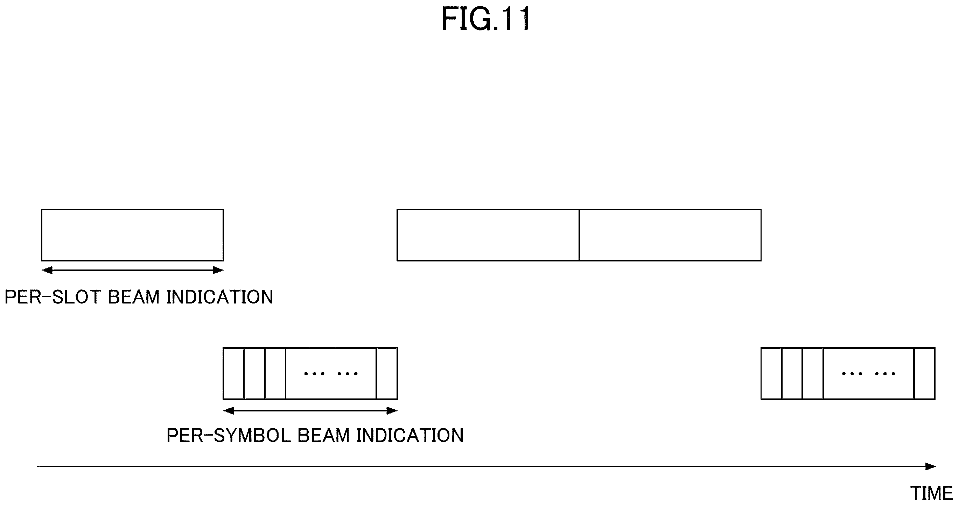

Fig. 11 is a drawing for describing an example (2) of a beam indication in an embodiment of the present invention. As illustrated in Fig. 11, the beam indication on a per-slot basis is performed via one signaling and the beam indication on a per-symbol basis may be performed via another signaling.

Option 1-2) The NCR access beam indication on a per-slot basis and the NCR access beam indication on a per-symbol basis may be indicated via single signaling.

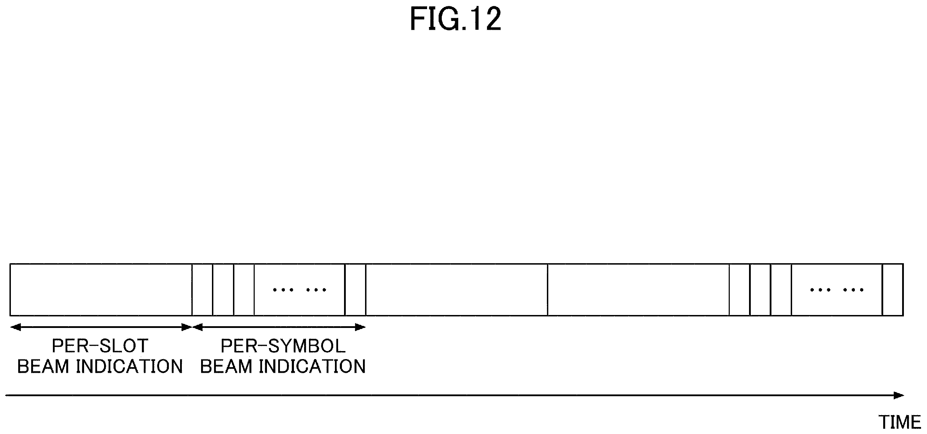

Fig. 12 is a drawing for describing an example (3) of a beam indication in an embodiment of the present invention. As illustrated in Fig. 12, a time domain sequence including the beam indication on a per-slot basis and the beam indication on a per-symbol basis may be indicated via single signaling.

The beam indications via the signaling may be performed according to the above-described Operation A) and Operation B), or the following Method 1) to Method 4) may be applied.

Method 1) The NCR access beam sequence may be indicated. The sequence may be applied to a sequence in time units and the NCR access beams may be applied to the corresponding time units.

Method 2) A single NCR access beam may be indicated. The single NCR access beam may be applied to a sequence in time units.

Method 3) A periodic pattern may be indicated. Periodicity and an offset may be indicated. An NCR access beam sequence may be indicated as beams applied to the corresponding time units included in the periodicity.

Method 4) A periodic pattern may be indicated. Periodicity and an offset may be indicated. A single NCR access beam may be indicated as a beam applied to each time unit included in the periodicity.

In the above-described beam indication method, the sequence in time units may include time units with different granularities. The granularity of each time unit may be indicated, or each time unit may be a slot or symbol.

For example, in a case where a sequence of time units is indicated as a continuous time duration, the NCR access beam indication may be performed either on a per-slot basis or on a per-symbol basis with respect to each slot in the time duration. In a case of the per-slot basis, a single beam may be indicated with respect to the slot. In a case of the per-symbol basis, a beam may be indicated for each symbol in the slot. In addition, in a case where there is no indication related to the granularity, the NCR access beam indication on a per-slot basis may be expected as a default operation. In addition, in a case where there is no indication related to the granularity, the NCR access beam indication on a per-symbol basis may be expected as a default operation.

For example, in a case where the sequence of time units is indicated as a sequence of time unit indexes, each time unit index included in the sequence may be a slot index, may be a symbol index, may be a slot index and a symbol index in the slot, may be a symbol position in the slot, or may be a bitmap indicating the symbol positions in the slot.

The time unit may be a slot, a symbol, a slot group, a symbol group, or a subframe. The slot or symbol may be replaced with a time unit with a different granularity. The slot may be replaced with a slot group, a subframe, or a symbol group. The symbol may be replaced with a slot group or a symbol group.

Option 2) The NCR access beam indication may be indicated on a per-slot basis or may be indicated on a per-symbol basis in a time unit. Both the beam indication on a per-slot basis and the beam indication on a per-symbol basis may be indicated to the NCR 30 in the time unit.

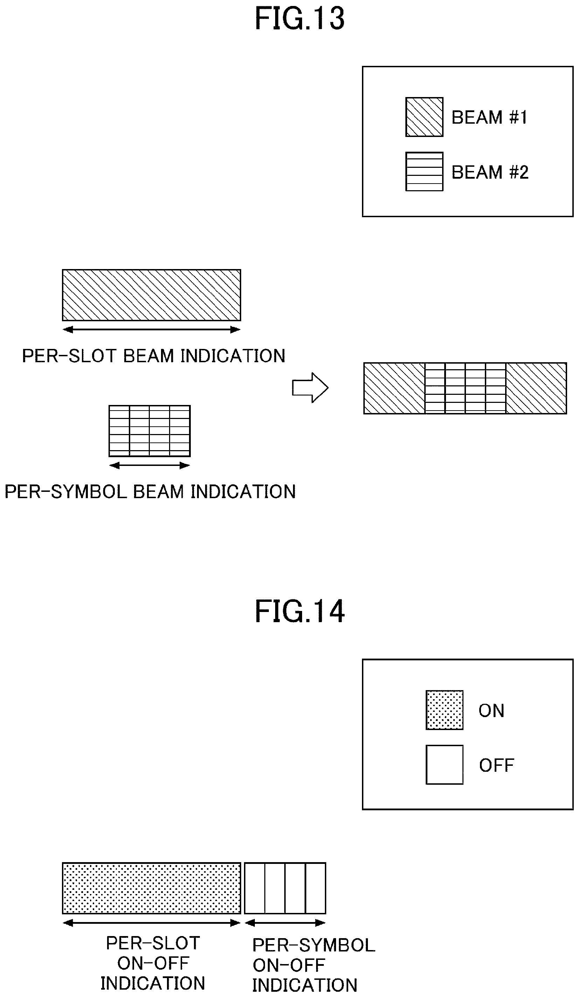

Fig. 13 is a drawing for describing an example (4) of a beam indication in an embodiment of the present invention. As illustrated in Fig. 13, the NCR 30 may overwrite per-symbol beam indications with respect to some symbols in a certain slot onto the per-slot beam indication. In a case where the per-symbol beam indications are indicated for some symbols in a certain slot, a per-slot beam indication may be applied to a symbol in the certain slot for which a per-symbol beam indication is not indicated.

The time unit may be a slot, a symbol, a slot group, a symbol group, or a subframe. The slot or symbol may be replaced with a time unit with a different granularity. The slot may be replaced with a slot group, a subframe, or a symbol group. The symbol may be replaced with a slot group or a symbol group.

Here, in a case where a plurality of signaling is supported for the NCR access beam indication, it is necessary to determine an operation of the NCR 30 to which the plurality of signaling is indicated with respect to a certain time unit.

In a case where a plurality of signaling indicating different beams with respect to the same time unit is received by the NCR 30, the NCR 30 may perform an operation described in the following Option 1) or Option 2). It is to be noted that the plurality of signaling may be different types of signaling. It is to be noted that the plurality of signaling may be the same type of signaling that is received at a different time point. For example, the plurality of signaling may be a plurality of DCI format X that is received at a different time point or a different monitoring occasion.

Option 1) The NCR 30 is not required to expect that a plurality of signaling indicating different beams with respect to the same time unit will be received. In a case where a plurality of signaling indicating the NCR access beams with respect to the same time unit, the NCR 30 may expect that the same NCR access beam will be indicated by the plurality of signaling.

For example, the NCR access beam via signaling Y may be indicated with respect to only the time unit for which the NCR access beam via signaling X is not indicated. The NCR 30 is not required to expect to receive signaling Y in a time unit for which the NCR access beam via signaling X is indicated.

For example, the NCR access beam via signaling Y may be indicated with respect to only the time unit for which a specific NCR access beam via signaling X is indicated. The NCR 30 is not required to expect to receive signaling Y in a time unit for which the specific NCR access beam via signaling X is not indicated.

For example, the NCR 30 may receive both the signaling X and the signaling Y with respect to only a time unit for which a specific indication is indicated. The NCR 30 may expect to receive either the signaling X or the signaling Y with respect to the time unit for which the specific indication is not indicated.

Option 2) The NCR 30 may apply a beam indication included in one of the signaling with respect to the time unit based on the following predefined Rule 1) or Rule 2).

Rule 1) The signaling to be applied may be determined based on the time at which the signaling is received. The NCR 30 may apply the beam indication included in the latest signaling in the time domain. The latest signaling in the time domain may be the signaling whose starting point is the latest or may be the signaling whose ending point is the latest.

Rule 2) The signaling to be applied may be determined based on the type of the signaling.

For example, in a case where dynamic signaling and semi-static signaling are received, the NCR 30 may apply a beam indication included in the dynamic signaling or may apply a beam indication included in the semi-static signaling. For example, DCI may be prioritized than MAC-CE or RRC signaling. For example, MAC-CE may be prioritized more than RRC signaling. Alternatively, RRC signaling may be prioritized more than MAC-CE or DCI.

In a case where signaling X and signaling Y are received, the NCR 30 may apply a beam indication included in the signaling X. Here, the signaling X and the signaling Y may be two types of signaling.

With respect to the above-described Option 1) or the above-described Option 2), a different option may be applied for a different signaling.

The time unit may be a slot, a symbol, a slot group, a symbol group, or a subframe. The beam indication via the above-described signaling may be performed according to the above-described Operation A) and Operation B).

The above-described operation may be applied to the NCR access link DL transmission beam indication and/or the NCR access link UL reception beam indication. The NCR access link beam may be indicated as a beam index, may be indicated as a gNB RS index, may be indicated as a new RS or new reference resource index, or may be indicated by using a TCI state index or other terminologies. The TCI state may be associated with a beam index, may be associated with a gNB RS index, may be associated with a new RS index, or may be associated with a new reference resource index.

The NCR capability described below may be defined.
- Whether or not the NCR 30 supports the NCR-Fwd access link beam control.

It is to be noted that an embodiment of the present invention may be applied only to a case where the corresponding capability is supported by the NCR 30 and/or to a case where the corresponding higher layer signaling is provided.

In addition, as described above, ON-OFF of the NCR 30 may be indicated. It is to be noted that the description of ON-OFF may mean either ON or OFF.

The ON-OFF indication of the NCR 30 may be performed as described in the following 1) to 9). An operation described in the following 1) to 9) is referred to as "Operation C".
1) A list of time units may be indicated. A list of ON-OFF indications may be indicated. Each ON-OFF indication may be indicated for the corresponding time unit.
2) A list of time units may be indicated. A single ON-OFF indications may be indicated. The single ON-OFF indication may be applied to a list of time units.
3) An ON-OFF periodic pattern may be indicated by the gNB. Periodicity and an offset may be indicated. A list of ON-OFF indications may be indicated. An ON-OFF indication may be indicated for each time unit in the periodicity.
4) An ON-OFF periodic pattern may be indicated by the gNB. Periodicity and an offset may be indicated. A list of a single ON-OFF indication may be indicated. The singly ON-OFF indication may be applied with respect to the time units in the periodicity.
5) The same signaling as the HSNA slot configuration in the gNB-DU cell resource configuration for IAB (Integrated Access and Backhaul) may be used. The HSNA means an indication of H (Hard)/S (Soft)/NA (Not Available) for IAB.
6) DCI format 2_5 may be used.
7) PDSCH/PUSCH scheduling DCI (DCI format 1_X, 0_X) may be used.
8) SPS/CG configuration/activation may be used.
9) When an ON-OFF indication is received, application of the indicated ON or OFF may start from a slot/symbol located after X slots/symbols from the last slot/symbol (or the first slot/symbol) of the indication. Alternatively, application of the indicated ON or OFF may start from a slot/symbol located after X slots/symbols from the last slot/symbol (or the first slot/symbol) of the HARQ-ACK feedback corresponding to the indication. It is to be noted that "slot/symbol" may mean a slot and/or a symbol. In addition, the indicated ON or OFF may be applied to the time duration that is configured or pre-defined, or may be applied until a new indication is received.

A time unit is equivalent to being indicated as "ON", if it is configured for cell-specific/semi-static signals/channels. For example, the signals or the channels may include SSB, SIB1 (PDCCH for Type0-CSS configured by pdcchConfigSIB1), periodic CSI-RS, PRACH, or SR.

Here, a combination of the slot-level ON-OFF indication and the symbol-level ON-OFF indication may be supported. In one slot, ON-OFF may be indicated for each slot, and in another slot, ON-OFF may be indicated for each symbol. Hereinafter, the signaling related to the combination will be described in detail.

In order to support a combination of the slot-level ON-OFF indication and the symbol-level ON-OFF indication, the following Option 1) and Option 2) may be performed.

Option 1) With respect to a certain time unit, the ON-OFF indication may be indicated either on a per-slot basis or on a per-symbol basis.

The per-slot ON-OFF indication and the per-symbol ON-OFF indication may be indicated with respect to non-overlapping time units. The NCR 30 is not required to expect to receive both a per-slot ON-OFF indication and a per-symbol ON-OFF indication with respect to a certain time unit.

Fig. 14 is a drawing for describing an example (1) of an ON-OFF indication in an embodiment of the present invention. As illustrated in Fig. 14, with respect to the same time unit, either a per-slot ON-OFF indication or a per-symbol ON-OFF indication may be indicated, or the indicated time domains are not required to overlap with each other.

In addition, a per-symbol indication may be expected with respect to a slot for which ON is indicated, or a per-symbol indication is not required to be expected with respect to a slot for which ON is not indicated. In addition, a per-symbol indication may be expected with respect to a slot for which OFF is indicated, or, a per-symbol indication is not required to be expected with respect to a slot for which OFF is not indicated.

In addition, a per-symbol indication may be expected for a slot for which specific information is indicated, or a per-symbol indication is not required to be expected for a slot for which the specific information is not indicated.

Option 1-1) The per-slot ON-OFF indication and the per-symbol ON-OFF indication may be indicated via separate signaling. The ON-OFF indication via the signaling may be performed according to the above-described Operation C).

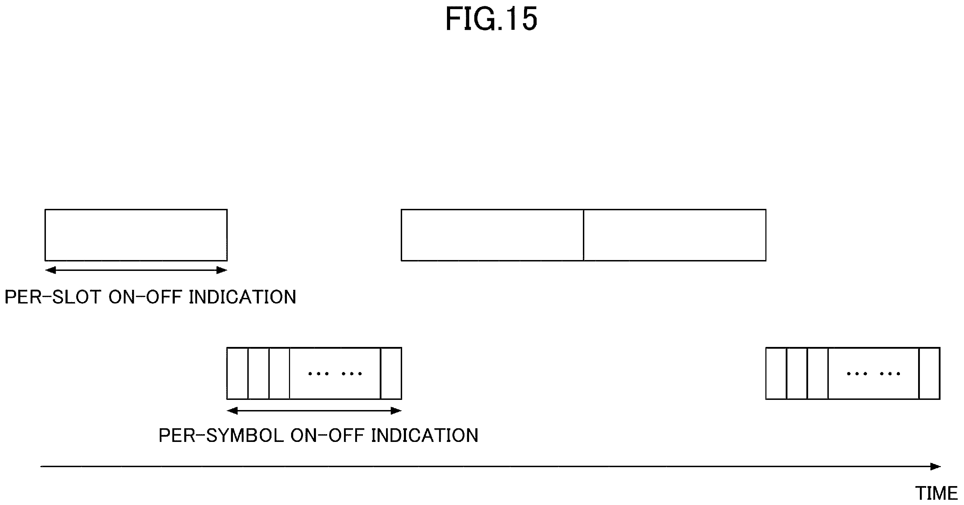

Fig. 15 is a drawing for describing an example (2) of an ON-OFF indication in an embodiment of the present invention. As illustrated in Fig. 15, a per-slot ON-OFF indication may be performed via one signaling and a per-symbol ON-OFF indication may be performed via another signaling.

Option 1-2) The per-slot ON-OFF indication and the per-symbol ON-OFF indication may be indicated via single signaling.

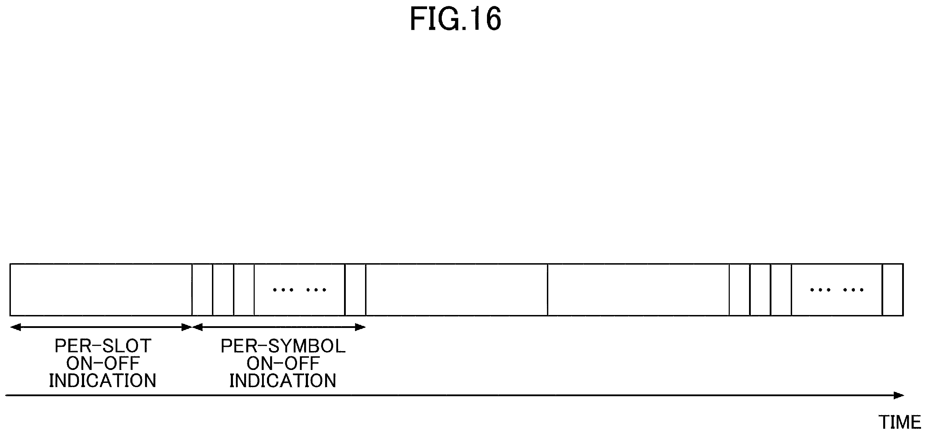

Fig. 16 is a drawing for describing an example (3) of an ON-OFF indication in an embodiment of the present invention. As illustrated in Fig. 16, a time domain sequence including the per-slot ON-OFF indication and the per-symbol ON-OFF indication may be indicated via single signaling.

The beam indications via the signaling may be performed according to the above-described Operation C), or the following Method 1) to Method 4) may be applied.

Method 1) ON-OFF sequence may be indicated. The sequence may be applied to a sequence of time units, and each ON-OFF may be applied to the corresponding time unit.

Method 2) A single ON-OFF may be indicated. The single ON-OFF may be applied to a sequence of time units.

Method 3) A periodic pattern may be indicated. Periodicity and an offset may be indicated. The ON-OFF sequence may be indicated as ON-OFFs applied to the corresponding time units included in the periodicity.

Method 4) A periodic pattern may be indicated. Periodicity and an offset may be indicated. A single ON-OFF may be indicated as a ON-OFF applied to each time unit included in the periodicity.

In the above-described ON-OFF indication method, the time unit sequence may include time units with different granularities. The granularity of each time unit may be indicated, each time unit may be a slot or a symbol.

For example, in a case where a sequence of time units is indicated as a continuous time duration, the ON-OFF indication may be performed either on a per-slot basis or on a per-symbol basis with respect to each slot in the time duration. In a case of the per-slot basis, a single ON-OFF may be indicated with respect to the slot. In a case of the per-symbol basis, a single ON-OFF may be indicated for each symbol in the slot. In addition, in a case where there is no indication related to the granularity, the per-slot ON-OFF indication may be expected as a default operation. In addition, in a case where there is no indication related to the granularity, the per-symbol ON-OFF indication may be expected as a default operation.

For example, in a case where the sequence of time units is indicated as a sequence of time unit indexes, each time unit index included in the sequence may be a slot index, may be a symbol index, may be a slot index and a symbol index in the slot, may be a symbol position in the slot, or may be a bitmap indicating the symbol positions in the slot.

The time unit may be a slot, a symbol, a slot group, a symbol group, or a subframe. The slot or symbol may be replaced with a time unit with a different granularity. The slot may be replaced with a slot group, a subframe, or a symbol group. The symbol may be replaced with a slot group or a symbol group.

Option 2) The ON-OFF indication may be indicated on a per-slot basis or may be indicated on a per-symbol basis with respect to a certain time unit. With respect to the time unit, both the per-slot ON-OFF indication and the per-symbol ON-OFF indication may be indicated to the NCR 30.

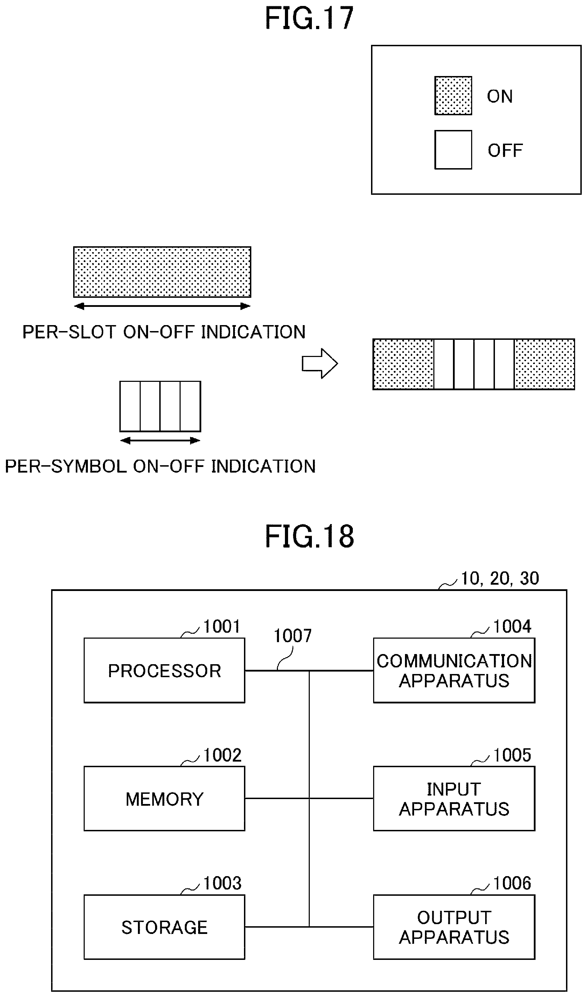

Fig. 17 is a drawing for describing an example (4) of an ON-OFF indication in an embodiment of the present invention. As illustrated in Fig. 17, the NCR 30 may overwrite per-symbol ON-OFF indications with respect to some symbols in a slot onto the per-slot ON-OFF indication. In a case where the per-symbol ON-OFF indications are indicated with respect to some symbols in a certain slot, the per-slot ON-OFF indication may be applied to a symbol in the certain slot for which a per-symbol ON-OFF indication is not indicated.

The time unit may be a slot, a symbol, a slot group, a symbol group, or a subframe. The slot or symbol may be replaced with a time unit with a different granularity. The slot may be replaced with a slot group, a subframe, or a symbol group. The symbol may be replaced with a slot group or a symbol group.

Here, in a case where a plurality of signaling is supported for the ON-OFF indication, it is necessary to determine an operation of the NCR 30 to which the plurality of signaling is indicated with respect to a certain time unit.

In a case where a plurality of signaling indicating different ON-OFF indications with respect to the same time unit is received by the NCR 30, the NCR 30 may perform an operation described in the following Option 1) or Option 2). It is to be noted that the plurality of signaling may be different types of signaling. It is to be noted that the plurality of signaling may be the same type of signaling that is received at a different time point. For example, the plurality of signaling may be a plurality of DCI format X that is received at a different time point or a different monitoring occasion.

Option 1) The NCR 30 is not required to expect that a plurality of signaling indicating different ON-OFF indications with respect to the same time unit will be received. In a case where a plurality of signaling indicating ON-OFF indications with respect to the same time unit is received, the NCR 30 may expect that the same ON-OFF indication is indicated by the plurality of signaling.

For example, the ON-OFF indication may be indicated via signaling Y with respect to only the time unit for which the ON-OFF indication via signaling X is not indicated. The NCR 30 is not required to expect to receive signaling Y with respect to a time unit for which the ON-OFF indication via signaling X is indicated.

For example, the ON-OFF indication via signaling Y may be indicated with respect to only a time unit for which the ON indication is indicated via signaling X. The NCR 30 is not required to expect to receive signaling Y with respect to a time unit for which the ON indication via signaling X is not indicated.

For example, the ON-OFF indication may be indicated via signaling Y with respect to only a time unit for which the OFF indication via signaling X is indicated. The NCR 30 is not required to expect to receive signaling Y with respect to a time unit for which the ON indication via signaling X is not indicated.

For example, the NCR 30 may receive both the signaling X and the signaling Y with respect to only a time unit for which a specific indication is indicated. The NCR 30 may expect to receive either the signaling X or the signaling Y with respect to the time unit for which the specific indication is not indicated.

Option 2) The NCR 30 may apply an ON-OFF indication included in one of the signaling with respect to the time unit based on the following predefined Rule 1) or Rule 2).

Rule 1) The signaling to be applied may be determined based on the time at which the signaling is received. The NCR 30 may apply the ON-OFF indication included in the latest signaling in the time domain. The latest signaling in the time domain may be the signaling whose starting point is the latest or may be the signaling whose ending point is the latest.

Rule 2) The signaling to be applied may be determined based on the type of the signaling.

For example, in a case where dynamic signaling and semi-static signaling are received, the NCR 30 may apply a beam indication included in the dynamic signaling or may apply a beam indication included in the semi-static signaling. For example, DCI may be prioritized more than MAC-CE or RRC signaling. For example, MAC-CE may be prioritized more than RRC signaling. Alternatively, RRC signaling may be prioritized more than MAC-CE or DCI.

In a case where signaling X and signaling Y are received, the NCR 30 may apply an ON-OFF indication included in the signaling X. Here, the signaling X and the signaling Y may be two types of signaling.

Rule 3) The signaling to be applied may be determined based on whether or not an ON or OFF indication is indicated. In a case where an ON indication is indicated via one signaling with respect to a time unit and where an OFF indication is indicated via another signaling with respect to the time unit, the NCR 30 may apply an ON indication. In other words, ON may be configured to be overwritten by OFF and OFF may be configured not to be overwritten by ON. In a case where an ON indication is indicated via one signaling with respect to a time unit and where an OFF indication is indicated via another signaling with respect to the time unit, the NCR 30 may apply an OFF indication. In other words, OFF may be configured to be overwritten by ON and ON may be configured not to be overwritten by OFF.

With respect to the above-described Option 1) or the above-described Option 2), a different option may be applied for a different signaling.

The time unit may be a slot, a symbol, a slot group, a symbol group, or a subframe. The ON-OFF indication via above-described signaling may be performed according to the above-described Operation C).

The NCR capability described below may be defined.
- Whether or not the NCR 30 supports the NCR-Fwd ON-OFF control.

It is to be noted that an embodiment of the present invention may be applied only to a case where the corresponding capability is supported by the NCR 30 and/or to a case where the corresponding higher layer signaling is provided.

According to an embodiment of the present invention, the network-controlled repeater can determine the target of signaling in the time domain that controls wireless signals that are relayed in the NCR-Fwd access link or backhaul link.

In other words, the network-controlled wireless relay device can control relaying of wireless signals in the time domain.

### (Hardware structure)

In the above block diagrams used for describing an embodiment of the present invention (Fig. 2, Fig. 3, and Fig. 4), functional unit blocks are shown. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wirelessly, or the like) and using these plurality of pieces of apparatus. The functional blocks may be implemented by combining software into the apparatus described above or the plurality of apparatuses described above.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. The method for implementing each component is not particularly limited as described above.

For example, the base station 10, the terminal 20, and the wireless relay device 30, etc., according to an embodiment of the present invention may function as a computer for processing the wireless communication method of the present disclosure. Fig. 18 is a drawing illustrating an example of hardware structures of the base station 10, the terminal 20 and the wireless relay device 30 according to an embodiment of the present invention. Each of the above-described base station 10, the terminal 20, and the wireless relay device 30 may be a computer device including a processor 1001, a memory 1002, a storage 1003, a communication apparatus 1004, an input apparatus 1005, an output apparatus 1006, a bus 1007, etc.

Note that in the present disclosure, the words such as an apparatus, a circuit, a device, a section, a unit, and so on can be interchangeably interpreted. The hardware structures of the base station 10, the terminal 20. and the wireless relay device 30 may include one or more of each of the devices illustrated in the figure, or may be configured without including some of the devices.

Each function in the base station 10, the terminal 20. and the wireless relay device 30 is implemented by having the processor 1001 perform an operation by reading predetermined software (programs) onto hardware such as the processor 1001 and the memory 1002, and by controlling communication by the communication apparatus 1004 and controlling at least one of reading or writing of data in the memory 1002 and the storage 1003.

The processor 1001 controls the whole computer by, for example, running an operating system. The processor 1001 may include a central processing unit (CPU) including an interface with a peripheral apparatus, a control apparatus, a calculation apparatus, a register, etc. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 2 may be implemented by control programs that are stored in the memory 1002 and that operate on the processor 1001. In addition, for example, the control unit 240 of the terminal 20 illustrated in Fig. 3 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (e.g., display, speaker, LED lamp). Note that the input apparatus 1005 and the output apparatus 1006 may be provided in an integrated structure (for example, a touch panel).

Furthermore, these types of apparatuses, including the processor 1001, the memory 1002, and others, are connected by a bus 1007 for communicating information. The bus 1007 may be formed with a single bus, or may be formed with buses that vary between pieces of apparatus.

Further, each of the base station 10, the terminal 20, and the wireless relay device 30 may include hardware such as a microprocessor, a digital signal processor (DSP), an ASIC (Application Specific Integrated Circuit), a PLD (Programmable Logic Device), an FPGA (Field Programmable Gate Array), etc., and a part or all of each functional block may be implemented by the hardware. For example, the processor 1001 may be implemented with at least one of these pieces of hardware.

In addition, the wireless relay device 30 may include a variable phase shifter, phase shifter, amplifier, antenna, antenna array, or the like, as the hardware included in the variable unit 340 and the antenna unit 350 depending on the necessity.

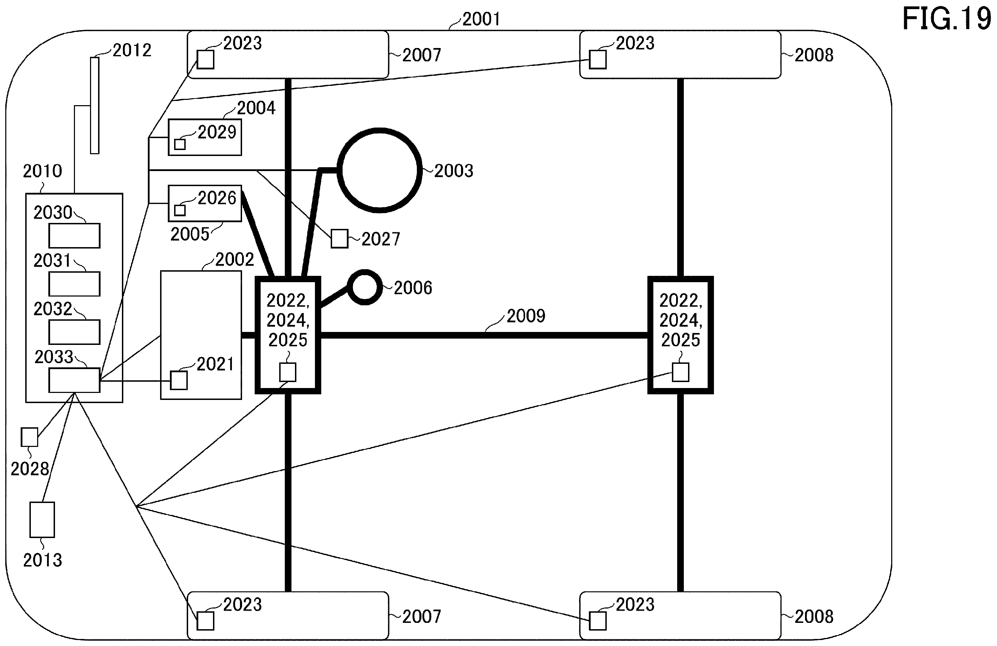

Fig. 19 shows an example of a configuration of a vehicle 2001. As shown in Fig. 19, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

According to the disclosed technique, a wireless relay device is provided. The wireless relay device includes: a communication unit configured to receive signaling including control information related to a relay function from a base station; a control unit configured to control a relay function based on the control information; and a relay unit configured to perform a relay function of receiving a first signal from the base station, transmitting the first signal to a terminal, receiving a second signal from the terminal, and transmitting the second signal to the base station. The control unit applies a plurality of controls indicated by the control information to the relay function, target time units of the controls being different.

According to the above-described configuration, the network-controlled repeater can determine the target of signaling in the time domain that controls wireless signals that are relayed in the NCR-Fwd access link or backhaul link. In other words, the network-controlled wireless relay device can control relaying of wireless signals in the time domain.

The plurality of controls include a first control and a second control, a target time unit of the second control being shorter than a target time unit of the first control. According to the above-described configuration, the network-controlled repeater can determine the target of signaling in the time domain that controls wireless signals that are relayed in the NCR-Fwd access link or backhaul link.

In a case where the first control and the second control target a same time domain, the control unit may overwrite the first control by the second control. According to the above-described configuration, the network-controlled repeater can determine the target of signaling in the time domain that controls wireless signals that are relayed in the NCR-Fwd access link or backhaul link.

The control unit may determine a beam for transmitting the first signal to the terminal or a beam for receiving the second signal from the terminal according to the plurality of controls. According to the above-described configuration, the network-controlled repeater can determine the target of signaling in the time domain that controls wireless signals that are relayed in the NCR-Fwd access link or backhaul link.

The control unit may enable or disable a relay function according to the plurality of controls. According to the above-described configuration, the network-controlled repeater can determine the target of signaling in the time domain that controls wireless signals that are relayed in the NCR-Fwd access link or backhaul link.

In addition, according to an embodiment of the present invention, a wireless relay method performed by a wireless relay device is provided. The wireless relay method includes: receiving signaling including control information related to a relay function from a base station; controlling a relay function based on the control information; performing a relay function of receiving a first signal from the base station, transmitting the first signal to a terminal, receiving a second signal from the terminal, and transmitting the second signal to the base station; and applying a plurality of controls indicated by the control information to the relay function, target time units of the controls being different.

According to the above-described configuration, the network-controlled repeater can determine the target of signaling in the time domain that controls wireless signals that are relayed in the NCR-Fwd access link or backhaul link. In other words, the network-controlled wireless relay device can control relaying of wireless signals in the time domain.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be reordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of the base station and the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval (TTI), multiple consecutive subframes may be referred to as a TTI, and one slot or one mini slot may be referred to as a TTI. In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a terminal 20.

At least one of configured BWPs may be active, and a terminal 20 may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

It is to be noted that, in the present disclosure, the variable unit 340 and the antenna unit 350 are examples of a relay unit.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Wireless relay device
310 Transmission unit
320 Reception unit
330 Control unit
340 Variable unit
350 Antenna unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A wireless relay device comprising:
a communication unit configured to receive signaling including control information related to a relay function from a base station;
a control unit configured to control a relay function based on the control information; and
a relay unit configured to perform a relay function of receiving a first signal from the base station, transmitting the first signal to a terminal, receiving a second signal from the terminal, and transmitting the second signal to the base station, wherein
the control unit applies a plurality of controls indicated by the control information to the relay function, target time units of the controls being different.

2. The wireless relay device as claimed in claim 1, wherein
the plurality of controls include a first control and a second control, a target time unit of the second control being shorter than a target time unit of the first control.

3. The wireless relay device as claimed in claim 2, wherein
in a case where the first control and the second control target a same time domain, the control unit overwrites the first control by the second control.

4. The wireless relay device as claimed in claim 3, wherein
the control unit determines a beam for transmitting the first signal to the terminal or a beam for receiving the second signal from the terminal according to the plurality of controls.

5. The wireless relay device as claimed in claim 3, wherein
the control unit enables or disables a relay function according to the plurality of controls.

6. A communication method performed by a wireless relay device, the communication method comprising:
receiving signaling including control information related to a relay function from a base station;
controlling a relay function based on the control information;
performing the relay function of receiving a first signal from the base station, transmitting the first signal to a terminal, receiving a second signal from the terminal, and transmitting the second signal to the base station; and
applying a plurality of controls indicated by the control information to the relay function, target time units of the controls being different.
